# EUROPÄISCHE PATENTSCHRIFT

(11) **EP 3 333 951 B1**
(45) Veröffentlichungstag und Bekanntmachung des Hinweises auf die Patenterteilung: **26.08.2020**
(21) Anmeldenummer: 17197694.7
(22) Anmeldetag: 23.10.2017
(51) Int. Cl.: H02J 3/14, H02J 3/32, H02J 3/28, H02J 3/38, H01M 8/04089, H01M 8/0612, H01M 8/04223, H01M 8/124, H01M 8/04303, H01M 8/04228

(54) **BRENNSTOFFZELLENVORRICHTUNG**
FUEL CELL APPARATUS
DISPOSITIF DE PILE À COMBUSTIBLE

(30) Priorität: 08.12.2016 DE 102016224497
(43) Veröffentlichungstag der Anmeldung: 13.06.2018
(73) Patentinhaber: Robert Bosch GmbH, 70442 Stuttgart (DE)
(72) Erfinder: Matter, Maren, 70565 Stuttgart (DE); Feilmeier, Christin, 70499 Stuttgart (DE); Carre, Maxime, 70469 Stuttgart (DE); Haeffelin, Andreas, 71665 Vaihingen (DE)

(56) Entgegenhaltungen:
- EP-A1- 1 780 860
- EP-A2- 1 968 142

## Beschreibung

### Stand der Technik

Es ist bereits eine Brennstoffzellenvorrichtung mit zumindest einer Brennstoffzelleneinheit, welche zumindest zu einer Erzeugung elektrischer Energie vorgesehen ist, und mit zumindest einem Wechselrichter, welcher dazu vorgesehen ist, die elektrische Energie zur Einspeisung in ein elektrisches Netz umzuformen, vorgeschlagen worden. EP1968142 A2 offenbart eine Brennstoffzellenvorrichtung mit zumindest einer Brennstoffzelleneinheit (1), welche zumindest zu einer Erzeugung elektrischer Energie vorgesehen ist, und mit zumindest einem Wechselrichter (13), welcher dazu vorgesehen ist, die elektrische Energie zur Einspeisung in ein elektrisches Netz (17) umzuformen. Ferner umfasst die Brennstoffzellenvorrichtung eine Lastpuffereinheit (11, 24), welche dazu vorgesehen ist, die elektrische Energie bei einem Lastabfall am Wechselrichter (13) zumindest teilweise aufzunehmen.

EP 1780860 A1 offenbart ein Verfahren zu einer Erzeugung und einer Verteilung einer elektrischen Energie, wobei ein netzseitiger Wechselrichter (42) eine elektrische Spannung und eine Frequenz eines elektrischen Netzes (20) konstant regelt. Für den Fall, dass eine Spannung und/oder eine Frequenz des elektrischen Netzes (20) außerhalb eines vorbestimmten Werts fällt, regelt eine Regeleinheit (50) die Spannung und/oder die Frequenz eines elektrischen Netzes (20), indem zumindest ein Teil einer elektrischen Energie zu einer Kompensationseinheit (52) geleitet wird.

### Offenbarung der Erfindung

Die Erfindung geht aus von einer Brennstoffzellenvorrichtung mit zumindest einer Brennstoffzelleneinheit (12c; 12d), welche zumindest zu einer Erzeugung elektrischer Energie vorgesehen ist, und mit zumindest einem Wechselrichter (14c; 14d), welcher dazu vorgesehen ist, die elektrische Energie zur Einspeisung in ein elektrisches Netz (16c; 16d) umzuformen, und mit einer Lastpuffereinheit (18c; 18d), welche dazu vorgesehen ist, die elektrische Energie bei einem Lastabfall am Wechselrichter (14c; 14d) zumindest teilweise aufzunehmen,dadurch gekennzeichnet, dass die Lastpuffereinheit (18c; 18d) auf einer Wechselstromseite (26c; 26d) des Wechselrichters (14c; 14d) angeordnet ist.

Es wird vorgeschlagen, dass die Brennstoffzellenvorrichtung eine Lastpuffereinheit aufweist, welche dazu vorgesehen ist, die elektrische Energie bei einem Lastabfall am Wechselrichter zumindest teilweise aufzunehmen.

Unter einer "Brennstoffzellenvorrichtung" soll in diesem Zusammenhang insbesondere ein, insbesondere funktionstüchtiger, Bestandteil, insbesondere eine Konstruktions- und/oder Funktionskomponente, eines Brennstoffzellensystems verstanden werden. Unter einem "Brennstoffzellensystem" soll in diesem Zusammenhang insbesondere ein System zu einer stationären und/oder mobilen Gewinnung insbesondere elektrischer und/oder thermischer Energie unter Verwendung zumindest einer Brennstoffzelleneinheit verstanden werden. Unter einer "Brennstoffzelleneinheit" soll in diesem Zusammenhang insbesondere eine Einheit mit zumindest einer Brennstoffzelle verstanden werden, welche dazu vorgesehen ist, zumindest eine chemische Reaktionsenergie zumindest eines, insbesondere kontinuierlich zugeführten, Brenngases, insbesondere Wasserstoff, und zumindest eines Oxidationsmittels, insbesondere Sauerstoff, insbesondere in elektrische Energie umzuwandeln. Die zumindest eine Brennstoffzelle kann insbesondere als Festoxid-Brennstoffzelle (SOFC) ausgebildet sein. Vorzugsweise umfasst die zumindest eine Brennstoffzelleneinheit eine Vielzahl von Brennstoffzellen, welche insbesondere in einem Brennstoffzellenstack angeordnet sind. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Wechselrichter" soll in diesem Zusammenhang insbesondere eine elektronische Einheit verstanden werden, welche zu einer Einspeisung der von der Brennstoffzelleneinheit erzeugten elektrischen Leistung in ein elektrisches Netz dazu vorgesehen ist, eine von der Brennstoffzelleneinheit bereitgestellte elektrische Gleichspannung in eine elektrische Wechselspannung zu wandeln. Unter einem "elektrischen Netz" soll in diesem Zusammenhang insbesondere ein Wechselspannungsnetz, beispielsweise ein Wechselspannungsnetz eines Energieversorgungsunternehmens und/oder ein Hausnetz, verstanden werden. Unter einer "Lastpuffereinheit" soll in diesem Zusammenhang insbesondere eine elektronische Einheit verstanden werden, welche dazu vorgesehen ist, zumindest zeitweise eine von der Brennstoffzelleneinheit erzeugte Leistung zumindest teilweise, vorzugsweise vollständig, aufzunehmen. Insbesondere ist die Lastpuffereinheit dazu vorgesehen, während eines Lastabfalls am Wechselrichter eine während des Lastabfalls von der Brennstoffzelleneinheit erzeugte elektrische Energie zumindest teilweise, vorzugsweise vollständig, aufzunehmen. Die Lastpuffereinheit ist insbesondere dazu vorgesehen, eine während eines Herunterfahrens der Brennstoffzellen aufgrund eines Lastabfalls am Wechselrichter von der Brennstoffzelleneinheit erzeugte elektrische Energie zumindest zeitweise aufzunehmen. Insbesondere ist die Lastpuffereinheit während eines Normalbetriebs der Brennstoffzellenvorrichtung elektrisch von der Brennstoffzelleneinheit entkoppelt. Die Lastpuffereinheit ist insbesondere während eines Lastabfalls am Wechselrichter elektrisch mit der Brennstoffzelleneinheit koppelbar. Die Lastpuffereinheit ist insbesondere dazu vorgesehen, die während eines Lastabfalls am Wechselrichter von der Brennstoffzelleneinheit über eine zumindest im Wesentlichen gesamte Zeitspanne des Lastabfalls am Wechselrichter und/oder die über eine zumindest im Wesentlichen gesamte Zeitspanne eines Herunterfahrens der Brennstoffzelleneinheit aufgrund eines Lastabfalls am Wechselrichter von der Brennstoffzelleneinheit erzeugte elektrische Energie zumindest teilweise, vorzugsweise vollständig, aufzunehmen.

Insbesondere kann ein Lastabfall am Wechselrichter, beispielsweise durch eine Störung im elektrischen Netz, zu einem unkontrollierten Lastzyklus mit hohen Stromwechselraten führen. Dies hat zur Folge, dass sich ohmische Verluste innerhalb der Brennstoffzelleinheit stark verändern und es zu einer schnellen Änderung einer Wärmeverteilung innerhalb der Brennstoffzelleneinheit kommt. Dies kann zu einer erhöhten Degradation und/oder zu irreversiblen Schädigungen der Brennstoffzelleneinheit führen.

Durch eine derartige Ausgestaltung kann eine gattungsgemäße Brennstoffzellenvorrichtung mit verbesserten Betriebseigenschaften bereitgestellt werden. Insbesondere können durch die Lastpuffereinheit unkontrollierte Lastzyklen aufgrund von Lastabfällen am Wechselrichter und eine daraus resultierende Degradation der Brennstoffzelleneinheit zumindest weitgehend vermieden werden.

Ferner wird vorgeschlagen, dass die Lastpuffereinheit zumindest ein Schaltelement aufweist, welches dazu vorgesehen ist, bei einem Lastabfall am Wechselrichter die elektrische Energie zumindest teilweise und vorzugsweise vollständig der Lastpuffereinheit zuzuleiten. Unter einem "Schaltelement" soll in diesem Zusammenhang insbesondere ein mechanisches, elektronisches, elektromechanisches und/oder elektromagnetisches Element verstanden werden, welches dazu vorgesehen ist, zwischen zumindest zwei Strompfaden umzuschalten. Insbesondere ist das Schaltelement dazu vorgesehen, in Abhängigkeit von einem Vorliegen eines Lastabfalls zwischen zwei Strompfaden umzuschalten. Das Schaltelement ist insbesondere dazu vorgesehen, bei Vorliegen eines Lastabfalls am Wechselrichter zwischen einem Strompfad zur Einspeisung der von der Brennstoffzelleneinheit erzeugten elektrischen Leistung in das elektrische Netz auf einen Strompfad zur Zuführung der von der Brennstoffzelleneinheit erzeugten elektrischen Leistung zur Lastpuffereinheit umzuschalten. Insbesondere kann das Schaltelement als ein als Wechsler ausgeführtes Relais ausgebildet sein. Hierdurch kann bei Vorliegen eines Lastabfalls am Wechselrichter die von der Brennstoffzelleneinheit erzeugte elektrische Leistung vorteilhaft einfach der Lastpuffereinheit zugeführt werden. Hierdurch können hohe Stromwechselraten zumindest weitgehend verhindert werden.

Des Weiteren wird vorgeschlagen, dass die Lastpuffereinheit zumindest einen elektrischen Verbraucher aufweist, welcher dazu vorgesehen ist, die elektrische Energie bei einem Lastabfall an der Stromrichtereinheit zumindest teilweise umzuwandeln. Unter einem "elektrischen Verbraucher" soll in diesem Zusammenhang insbesondere ein elektrisches Element und/oder eine elektrische Baugruppe verstanden werden, welche dazu vorgesehen ist, elektrische Energie in eine von einer elektrischen Energie verschiedene Energieform zu überführen. Insbesondere ist der elektrische Verbraucher dazu vorgesehen, bei einem Vorliegen eines Lastabfalls am Wechselrichter eine von der Brennstoffzelleneinheit erzeugte elektrische Energie zumindest im Wesentlichen in eine von einer elektrischen Energie verschiedene Energieform zu überführen. Insbesondere kann der elektrische Verbraucher dazu vorgesehen sein, die von der Brennstoffzelleneinheit während eines Lastabfalls am Wechselrichter erzeugte elektrische Energie in Wärme und/oder mechanische Energie zu überführen. Insbesondere kann der Verbraucher als ein thermischer und/oder mechanischer Speicher ausgebildet sein, welcher dazu vorgesehen ist, die von der Brennstoffzelleneinheit während eines Lastabfalls am Wechselrichter erzeugte elektrische Energie in Form von thermischer und/oder mechanischer Energie zumindest temporär zu speichern. Alternativ oder zusätzlich wird vorgeschlagen, dass die Lastpuffereinheit zumindest einen elektrischen Speicher aufweist, welcher dazu vorgesehen ist, die elektrische Energie bei einem Lastabfall an der Stromrichtereinheit zumindest teilweise und vorzugsweise vollständig zu speichern. Insbesondere ist der elektrische Speicher dazu vorgesehen, bei einem Vorliegen eines Lastabfalls am Wechselrichter eine von der Brennstoffzelleneinheit erzeugte elektrische Energie zumindest im Wesentlichen zumindest temporär zu speichern. Beispielsweise kann der elektrische Speicher als zumindest eine aufladbare Batterie, ein Akkumulator und/oder ein Kondensator, insbesondere ein Superkondensator, ausgebildet sein. Hierdurch kann bei einem Lastabfall am Wechselrichter eine vorteilhaft geringe Stromwechselrate erreicht werden, wodurch Schäden an der Brennstoffzelleneinheit zumindest weitgehend vermieden werden können. Insbesondere bei einer Verwendung eines elektrischen, thermischen und/oder mechanischen Speichers kann die während des Lastabfalls am Wechselrichter von der Brennstoffzelleneinheit erzeugte elektrische Energie vorteilhaft für eine Weiterverwendung gespeichert werden.

Zudem wird vorgeschlagen, dass die Lastpuffereinheit auf einer Wechselstromseite des Wechselrichters angeordnet ist. Alternativ oder zusätzlich wird vorgeschlagen, dass die Lastpuffereinheit auf einer Gleichstromseite des Wechselrichters angeordnet ist. Hierdurch kann eine vorteilhaft einfache und/oder flexible Einbindung und/oder eine vorteilhaft einfache Nachrüstbarkeit der Lastpuffereinheit ermöglicht werden.

Ferner wird vorgeschlagen, dass die Lastpuffereinheit eine Steuer- und/oder Regeleinheit aufweist, welche dazu vorgesehen ist, die Brennstoffzelleneinheit bei einem Lastabfall am Wechselrichter herunterzufahren und die elektrische Energie der Lastpuffereinheit zuzuleiten. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Insbesondere umfasst die Steuer- und/oder Regeleinheit zumindest ein Sensorelement, welches zumindest dazu vorgesehen ist, einen Lastabfall am Wechselrichter zu detektieren. Die Steuer- und/oder Regeleinheit ist insbesondere dazu vorgesehen, ein Schaltelement zur Umschaltung zwischen einem Strompfad zur Einspeisung der von der Brennstoffzelleneinheit erzeugten elektrischen Leistung in das elektrische Netz auf einen Strompfad zur Zuführung der von der Brennstoffzelleneinheit erzeugten elektrischen Leistung zur Lastpuffereinheit anzusteuern. Unter einem "Herunterfahren" der Brennstoffzelleneinheit soll in diesem Zusammenhang insbesondere zumindest eine Reduzierung einer durch die Brennstoffzelleinheit erzeugten elektrischen Leistung und oder ein kontrolliertes Abschalten der Brennstoffzelleneinheit, insbesondere bei Vorliegen eines Lastabfalls am Wechselrichter, verstanden werden. Hierdurch kann eine vorteilhaft kontrollierte Reduktion einer von der Brennstoffzelleinheit erzeugten elektrischen Leistung bei Vorliegen eines Lastabfalls am Wechselrichter erreicht werden.

Ferner wird ein Brennstoffzellensystem mit zumindest einer Brennstoffzelleneinheit vorgeschlagen. Neben der Brennstoffzellenvorrichtung kann das Brennstoffzellensystem insbesondere eine Entschwefelungseinheit und/oder eine Reformereinheit umfassen. Unter einer "Entschwefelungseinheit" soll in diesem Zusammenhang insbesondere eine Einheit verstanden werden, welche dazu vorgesehen ist, vorzugsweise durch zumindest ein physikalisches und/oder chemisches Adsorptionsverfahren und/oder Absorptionsverfahren, einen Volumen- oder Molanteil an Schwefelverbindungen in einem fluidischen Brennstoff unter einen festgelegten Grenzwert zu senken und vorzugsweise zumindest im Wesentlichen aus einem fluidischen Brennstoff zu entfernen. Unter einer "Reformereinheit" soll in diesem Zusammenhang insbesondere eine chemisch-technische Einheit zu zumindest einer Aufbereitung zumindest eines kohlenwasserstoffhaltigen Brennstoffs, insbesondere des Erdgases, insbesondere durch eine Dampfreformierung, durch eine partielle Oxidation, durch eine autotherme Reformierung und/oder durch eine Kombination einer Dampfreformierung mit einer CO₂-Trockenreformierung, insbesondere zur Gewinnung des zumindest einen Brenngases, insbesondere Wasserstoff, und/oder zum Aufbrechen höherkettiger Alkene verstanden werden. Ferner kann das Brennstoffzellensystem eine Mehrzahl von elektrischen Wärmeerzeugern aufweisen, welche insbesondere zu einer Temperierung der Entschwefelungseinheit und/oder der Reformereinheit vorgesehen sind. Insbesondere können die elektrischen Wärmeerzeuger als elektrische Verbraucher in die Lastpuffereinheit eingebunden sein. Hierdurch kann ein gattungsgemäßes Brennstoffzellensystem mit verbesserten Betriebseigenschaften bereitgestellt werden. Insbesondere können durch die Lastpuffereinheit unkontrollierte Lastzyklen aufgrund von Lastabfällen am Wechselrichter und eine daraus resultierende Degradation der Brennstoffzelleneinheit zumindest weitgehend vermieden werden.

Zudem wird ein Verfahren zum Betrieb einer Brennstoffzellenvorrichtung mit zumindest einer Brennstoffzelleneinheit, welche zumindest zu einer Erzeugung elektrischer Energie vorgesehen ist, und mit zumindest einem Wechselrichter, welcher dazu vorgesehen ist, die elektrische Energie zur Einspeisung in ein elektrisches Netz umzuformen, vorgeschlagen, wobei die elektrische Energie bei einem Lastabfall am Wechselrichter zumindest teilweise von einer Lastpuffereinheit aufgenommen wird. Ferner wird vorgeschlagen, dass die Brennstoffzelleneinheit bei einem Lastabfall am Wechselrichter heruntergefahren und die während des Herunterfahrens von der Brennstoffzelleneinheit erzeugte Energie der Lastpuffereinheit zugeführt wird. Hierdurch können unkontrollierte Lastzyklen aufgrund von Lastabfällen am Wechselrichter und eine daraus resultierende Degradation der Brennstoffzelleneinheit zumindest weitgehend vermieden werden.

Die erfindungsgemäße Brennstoffzellenvorrichtung soll hierbei nicht auf die oben beschriebene Anwendung und Ausführungsform beschränkt sein. Insbesondere kann die erfindungsgemäße Brennstoffzellenvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind vier Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Brennstoffzellensystems mit einer Brennstoffzellenvorrichtung, die eine Lastpuffereinheit mit einem elektrischen Verbraucher aufweist,
- Fig. 2: eine schematische Darstellung eines Brennstoffzellensystems mit einer alternativen Brennstoffzellenvorrichtung, die eine Lastpuffereinheit mit einem elektrischen Speicher aufweist,
- Fig.3: eine schematische Darstellung eines Brennstoffzellensystems mit einer weiteren alternativen Brennstoffzellenvorrichtung, die eine Lastpuffereinheit mit einem elektrischen Verbraucher aufweist, und
- Fig.4: eine schematische Darstellung eines Brennstoffzellensystems mit einer weiteren alternativen Brennstoffzellenvorrichtung, die eine Lastpuffereinheit mit einem elektrischen Speicher aufweist.

### Beschreibung der Ausführungsbeispiele

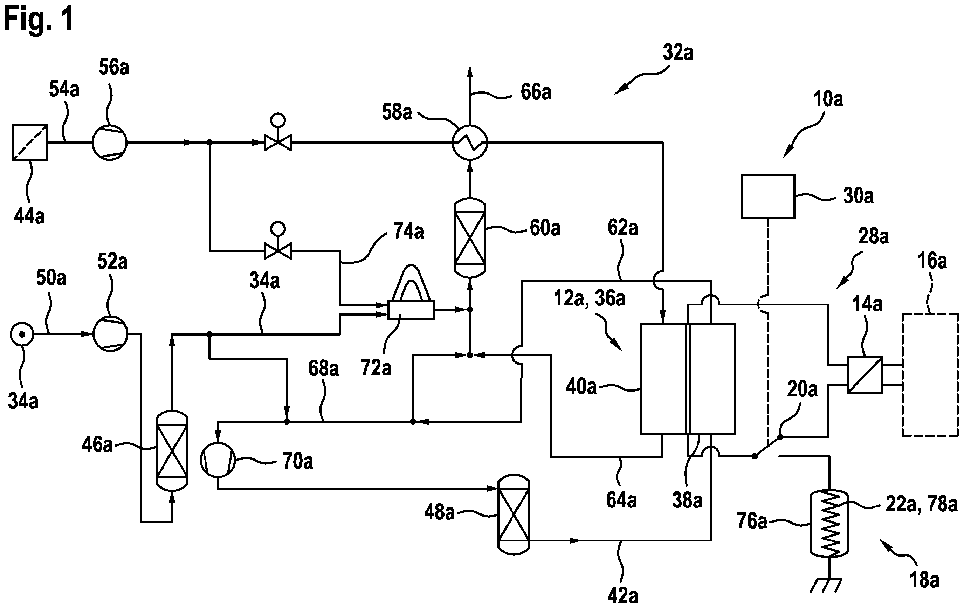

Figur 1 zeigt eine schematische Darstellung eines Brennstoffzellensystems 32a mit einer Brennstoffzellenvorrichtung 10a. Das Brennstoffzellensystem 32a ist dazu vorgesehen, mit einem fluidischen Brennstoff 34a, beispielsweise Erdgas, betrieben zu werden. Die Brennstoffzellenvorrichtung 10a weist eine Brennstoffzelleneinheit 12a auf, welche zu einer Erzeugung elektrischer Energie vorgesehen ist. Die Brennstoffzelleneinheit 12a ist hier vereinfacht als eine Brennstoffzelle 36a dargestellt. Zweckmäßig ist jedoch eine Ausbildung einer Brennstoffzelleneinheit als ein Brennstoffzellenstack mit einer Vielzahl von Brennstoffzellen. Die Brennstoffzelleneinheit 12a weist eine Anode 38a und eine Kathode 40a auf. Der Anode 38a wird während eines Betriebs der Brennstoffzelleneinheit 12a ein aus dem Brennstoff 34a gewonnenes Brenngas 42a, insbesondere Wasserstoff, zugeführt. Der Kathode 40a wird während eines Betriebs der Brennstoffzelleneinheit 12a ein Kathodengas 44a, insbesondere Luftsauerstoff, zugeführt. Des Weiteren weist die Brennstoffzellenvorrichtung 10a einen Wechselrichter 14a auf, welcher dazu vorgesehen ist, die von der Brennstoffzelleneinheit 12a erzeugte elektrische Energie zur Einspeisung in ein elektrisches Netz 16a umzuformen.

Ferner weist die Brennstoffzellenvorrichtung 10a eine der Brennstoffzelleneinheit 12a strömungstechnisch vorgeschaltete Entschwefelungseinheit 46a auf. Die Entschwefelungseinheit 46a ist dazu vorgesehen, den Brennstoff 34a zumindest teilweise zu entschwefeln. Zur Gewinnung des Brenngases 42a weist die Brennstoffzellenvorrichtung 10a eine der Entschwefelungseinheit 46a strömungstechnisch nachgeschaltete Reformereinheit 48a auf.

Der Brennstoff 34a wird während eines Betriebs der Brennstoffzelleneinheit 12a über eine Versorgungsleitung 50a in das Brennstoffzellensystem 32a eingespeist. Der Brennstoff 34a wird mittels eines Verdichters 52a gefördert. Das aus der Reformereinheit 48a austretende Brenngas 42a wird der Anode 38a der Brennstoffzelleneinheit 12a zugeführt. Das Kathodengas 44a wird über eine weitere Versorgungsleitung 54a in das Brennstoffzellensystem 32a eingespeist. Das Kathodengas 44a wird mittels eines Verdichters 56a gefördert. Vor Eintritt in die Kathode 40a der Brennstoffzelleneinheit 12a wird das Kathodengas 44a mittels eines Wärmeübertragers 58a erwärmt.

Ferner weist die Brennstoffzellenvorrichtung 10a einen Nachbrenner 60a auf. Der Nachbrenner 60a ist der Brennstoffzelleneinheit 12a strömungstechnisch nachgeschaltet. Dem Nachbrenner 60a wird ein Teil eines Anodenabgases 62a der Brennstoffzelleneinheit 12a zugeführt. Der Nachbrenner 60a ist dazu vorgesehen, in dem Anodenabgas 62a der Brennstoffzelleneinheit 12a verbliebene brennbare Stoffe, insbesondere nicht umgesetzten Wasserstoff, zu verbrennen. Ein für einen Betrieb des Nachbrenners 60a benötigter Sauerstoff wird dem Nachbrenner 60a in Form eines Kathodenabgases 64a der Brennstoffzelleneinheit 12a zugeführt. Ein Abgas 66a des Nachbrenners 60a wird aus dem Brennstoffzellensystem 32a ausgeleitet. Die Brennstoffzellenvorrichtung 10a weist ferner einen Rezirkulationskreis 68a auf, welcher zu einer teilweisen Rezirkulation des wasserstoff- und wasserhaltigen Anodenabgases 62a der Brennstoffzelleneinheit 12a vorgesehen ist. Der Rezirkulationskreis 68a ist insbesondere dazu vorgesehen, das Anodenabgas 62a der Brennstoffzelleneinheit 12a zumindest teilweise zur Vermischung mit dem entschwefelten Brennstoff 34a zurückzuführen. Innerhalb des Rezirkulationskreises 68a ist ein Verdichter 70a angeordnet.

Des Weiteren weist die Brennstoffzellenvorrichtung 10a einen Startbrenner 72a auf. Während eines Hochfahrens der Brennstoffzelleneinheit 12a wird entschwefelter Brennstoff 34a und Luft 74a dem Startbrenner 72a, welcher dazu vorgesehen ist, das Kathodengas 44a während des Hochfahrens aufzuheizen, zugeführt. Über das aufgeheizte Kathodengas 44a wird die Brennstoffzellenvorrichtung 10a, insbesondere die Brennstoffzelleneinheit 12a, auf eine Betriebstemperatur erwärmt.

Ferner weist die Brennstoffzellenvorrichtung 10b eine Lastpuffereinheit 18a auf. Die Lastpuffereinheit 18a ist dazu vorgesehen, die von der Brennstoffzelleneinheit 12a erzeugte elektrische Energie bei einem Lastabfall am Wechselrichter 14a zumindest teilweise aufzunehmen. Die Lastpuffereinheit 18a ist auf einer Gleichstromseite 28a des Wechselrichters 14a angeordnet. Die Lastpuffereinheit 18a weist ein Schaltelement 20a auf, welches dazu vorgesehen ist, bei einem Lastabfall am Wechselrichter 14a die elektrische Energie zumindest teilweise der Lastpuffereinheit 18a zuzuleiten. Das Schaltelement 20a kann insbesondere ein als ein Wechsler ausgebildetes Relais sein. In einem Normalbetrieb der Brennstoffzelleneinheit 12a ist das Schaltelement 20a derart geschaltet, dass die von der Brennstoffzelleneinheit 12a erzeugte elektrische Energie vollständig in das elektrische Netz 16a eingespeist wird. Bei Vorliegen eines Lastabfalls am Wechselrichter 14a ist das Schaltelement 20a derart geschaltet, dass die von der Brennstoffzelleneinheit 12a erzeugte elektrische Energie vollständig der Lastpuffereinheit 18a zugeführt wird. Die Lastpuffereinheit 18a weist eine Steuer- und/oder Regeleinheit 30a auf, welche dazu vorgesehen ist, die Brennstoffzelleneinheit 12a bei einem Lastabfall am Wechselrichter 14a herunterzufahren und die von der Brennstoffzelleneinheit 12a erzeugte elektrische Energie der Lastpuffereinheit 18a zuzuleiten. Insbesondere ist die Steuer- und/oder Regeleinheit 30a dazu vorgesehen, bei Vorliegen eines Lastabfalls am Wechselrichter 14a das Schaltelement 20a derart anzusteuern, dass die von der Brennstoffzelleneinheit 12a erzeugte elektrische Energie vollständig der Lastpuffereinheit 18a zugeführt wird. Die Lastpuffereinheit 18a weist zumindest einen elektrischen Verbraucher 22a auf, welcher dazu vorgesehen ist, die während eines Lastabfalls am Wechselrichter 14a von der Brennstoffzelleneinheit 12a erzeugte elektrische Energie zumindest teilweise umzuwandeln. Der elektrische Verbraucher 22a ist hier beispielhaft als ein in einem thermischen Speicher 76a angeordneter elektrischer Wärmeerzeuger 78a ausgebildet. Die in Form von Wärme gespeicherte Energie kann vorteilhaft einer Weiterverwendung zugeführt werden.

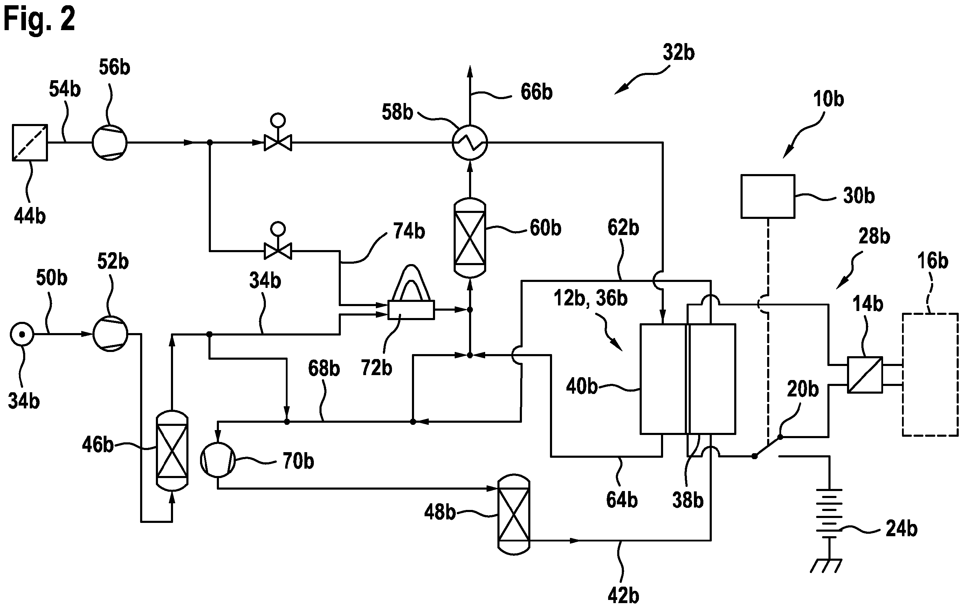

In den Figuren 2 bis 4 sind drei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung der anderen Ausführungsbeispiele, insbesondere der Figur 1, verwiesen werden kann. Zur Unterscheidung der Ausführungsbeispiele ist der Buchstabe a den Bezugszeichen des Ausführungsbeispiels in Figur 1 nachgestellt. In dem Ausführungsbeispiel der Figuren 2 bis 4 ist der Buchstabe a durch die Buchstaben b bis d ersetzt.

Figur 2 zeigt eine schematische Darstellung eines Brennstoffzellensystems 32b mit einer alternativen Brennstoffzellenvorrichtung 10b. Die Brennstoffzellenvorrichtung 10b weist eine Brennstoffzelleneinheit 12b auf, welche zu einer Erzeugung elektrischer Energie vorgesehen ist. Die Brennstoffzelleneinheit 12b ist hier vereinfacht als eine Brennstoffzelle 36b dargestellt. Zweckmäßig ist jedoch eine Ausbildung einer Brennstoffzelleneinheit als ein Brennstoffzellenstack mit einer Vielzahl von Brennstoffzellen. Die Brennstoffzelleneinheit 12b weist eine Anode 38b und eine Kathode 40b auf. Des Weiteren weist die Brennstoffzellenvorrichtung 10b einen Wechselrichter 14b auf, welcher dazu vorgesehen ist, die von der Brennstoffzelleneinheit 12b erzeugte elektrische Energie zur Einspeisung in ein elektrisches Netz 16b umzuformen.

Ferner weist die Brennstoffzellenvorrichtung 10b eine Lastpuffereinheit 18b auf. Die Lastpuffereinheit 18b ist dazu vorgesehen, die von der Brennstoffzelleneinheit 12b erzeugte elektrische Energie bei einem Lastabfall am Wechselrichter 14a zumindest teilweise aufzunehmen. Die Lastpuffereinheit 18b ist auf einer Gleichstromseite 28b des Wechselrichters 14b angeordnet. Die Lastpuffereinheit 18b weist ein Schaltelement 20b auf, welches dazu vorgesehen ist, bei einem Lastabfall am Wechselrichter 14b die elektrische Energie zumindest teilweise der Lastpuffereinheit 18b zuzuleiten. Das Schaltelement 20b kann insbesondere ein als ein Wechsler ausgebildetes Relais sein. In einem Normalbetrieb der Brennstoffzelleneinheit 12b ist das Schaltelement 20b derart geschaltet, dass die von der Brennstoffzelleneinheit 12b erzeugte elektrische Energie vollständig in das elektrische Netz 16b eingespeist wird. Bei Vorliegen eines Lastabfalls am Wechselrichter 14b ist das Schaltelement 20b derart geschaltet, dass die von der Brennstoffzelleneinheit 12b erzeugte elektrische Energie vollständig der Lastpuffereinheit 18b zugeführt wird. Die Lastpuffereinheit 18b weist eine Steuer- und/oder Regeleinheit 30b auf, welche dazu vorgesehen ist, die Brennstoffzelleneinheit 12b bei einem Lastabfall am Wechselrichter 14b herunterzufahren und die von der Brennstoffzelleneinheit 12b erzeugte elektrische Energie der Lastpuffereinheit 18b zuzuleiten. Insbesondere ist die Steuer- und/oder Regeleinheit 30b dazu vorgesehen, bei Vorliegen eines Lastabfalls am Wechselrichter 14b das Schaltelement 20b derart anzusteuern, dass die von der Brennstoffzelleneinheit 12b erzeugte elektrische Energie vollständig der Lastpuffereinheit 18b zugeführt wird. Die Lastpuffereinheit 18b weist zumindest einen elektrischen Speicher 24b auf, welcher dazu vorgesehen ist, die elektrische Energie bei einem Lastabfall am Wechselrichter 14b zumindest teilweise zu speichern. Der elektrische Speicher 24b kann beispielsweise als eine aufladbare Batterie ausgebildet sein. Die gespeicherte elektrische Energie kann vorteilhaft einer Weiterverwendung zugeführt werden.

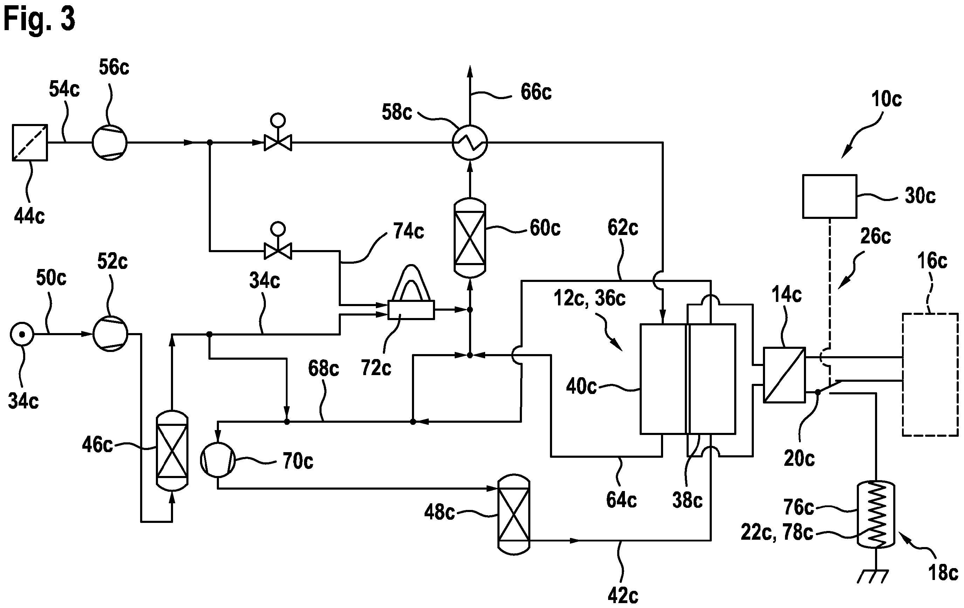

Figur 3 zeigt eine schematische Darstellung eines Brennstoffzellensystems 32c mit einer weiteren alternativen Brennstoffzellenvorrichtung 10c. Die Brennstoffzellenvorrichtung 10c weist eine Brennstoffzelleneinheit 12c auf, welche zu einer Erzeugung elektrischer Energie vorgesehen ist. Die Brennstoffzelleneinheit 12c ist hier vereinfacht als eine Brennstoffzelle 36c dargestellt. Zweckmäßig ist jedoch eine Ausbildung einer Brennstoffzelleneinheit als ein Brennstoffzellenstack mit einer Vielzahl von Brennstoffzellen. Die Brennstoffzelleneinheit 12c weist eine Anode 38c und eine Kathode 40c auf. Des Weiteren weist die Brennstoffzellenvorrichtung 10c einen Wechselrichter 14c auf, welcher dazu vorgesehen ist, die von der Brennstoffzelleneinheit 12c erzeugte elektrische Energie zur Einspeisung in ein elektrisches Netz 16c umzuformen.

Ferner weist die Brennstoffzellenvorrichtung 10c eine Lastpuffereinheit 18c auf. Die Lastpuffereinheit 18c ist dazu vorgesehen, die von der Brennstoffzelleneinheit 12c erzeugte elektrische Energie bei einem Lastabfall am Wechselrichter 14c zumindest teilweise aufzunehmen. Die Lastpuffereinheit 18c ist auf einer Wechselstromseite 26c des Wechselrichters 14c angeordnet. Die Lastpuffereinheit 18c weist ein Schaltelement 20c auf, welches dazu vorgesehen ist, bei einem Lastabfall am Wechselrichter 14c die elektrische Energie zumindest teilweise der Lastpuffereinheit 18c zuzuleiten. Das Schaltelement 20c kann insbesondere ein als ein Wechsler ausgebildetes Relais sein. In einem Normalbetrieb der Brennstoffzelleneinheit 12c ist das Schaltelement 20c derart geschaltet, dass die von der Brennstoffzelleneinheit 12c erzeugte elektrische Energie vollständig in das elektrische Netz 16c eingespeist wird. Bei Vorliegen eines Lastabfalls am Wechselrichter 14c ist das Schaltelement 20c derart geschaltet, dass die von der Brennstoffzelleneinheit 12c erzeugte elektrische Energie vollständig der Lastpuffereinheit 18c zugeführt wird. Die Lastpuffereinheit 18c weist eine Steuer- und/oder Regeleinheit 30c auf, welche dazu vorgesehen ist, die Brennstoffzelleneinheit 12c bei einem Lastabfall am Wechselrichter 14c herunterzufahren und die von der Brennstoffzelleneinheit 12c erzeugte elektrische Energie der Lastpuffereinheit 18c zuzuleiten. Insbesondere ist die Steuer- und/oder Regeleinheit 30c dazu vorgesehen, bei Vorliegen eines Lastabfalls am Wechselrichter 14c das Schaltelement 20c derart anzusteuern, dass die von der Brennstoffzelleneinheit 12c erzeugte elektrische Energie vollständig der Lastpuffereinheit 18c zugeführt wird. Die Lastpuffereinheit 18c weist zumindest einen elektrischen Verbraucher 22c auf, welcher dazu vorgesehen ist, die während eines Lastabfalls am Wechselrichter 14c von der Brennstoffzelleneinheit 12c erzeugte elektrische Energie zumindest teilweise umzuwandeln. Der elektrische Verbraucher 22c ist hier beispielhaft als ein in einem thermischen Speicher 76c angeordneter elektrischer Wärmeerzeuger 78c ausgebildet. Die in Form von Wärme gespeicherte Energie kann vorteilhaft einer Weiterverwendung zugeführt werden.

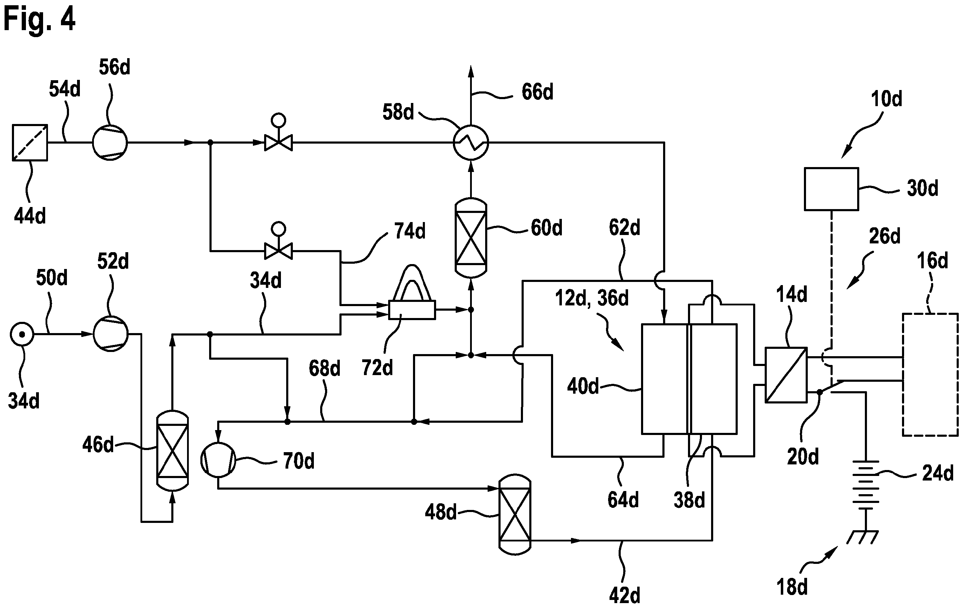

Figur 4 zeigt eine schematische Darstellung eines Brennstoffzellensystems 32d mit einer weiteren alternativen Brennstoffzellenvorrichtung 10d. Die Brennstoffzellenvorrichtung 10d weist eine Brennstoffzelleneinheit 12d auf, welche zu einer Erzeugung elektrischer Energie vorgesehen ist. Die Brennstoffzelleneinheit 12d ist hier vereinfacht als eine Brennstoffzelle 36d dargestellt. Zweckmäßig ist jedoch eine Ausbildung einer Brennstoffzelleneinheit als ein Brennstoffzellenstack mit einer Vielzahl von Brennstoffzellen. Die Brennstoffzelleneinheit 12d weist eine Anode 38d und eine Kathode 40d auf. Des Weiteren weist die Brennstoffzellenvorrichtung 10d einen Wechselrichter 14d auf, welcher dazu vorgesehen ist, die von der Brennstoffzelleneinheit 12a erzeugte elektrische Energie zur Einspeisung in ein elektrisches Netz 16d umzuformen.

Ferner weist die Brennstoffzellenvorrichtung 10d eine Lastpuffereinheit 18d auf. Die Lastpuffereinheit 18d ist dazu vorgesehen, die von der Brennstoffzelleneinheit 12d erzeugte elektrische Energie bei einem Lastabfall am Wechselrichter 14d zumindest teilweise aufzunehmen. Die Lastpuffereinheit 18b ist auf einer Wechselstromseite 26d des Wechselrichters 14d angeordnet. Die Lastpuffereinheit 18d weist ein Schaltelement 20d auf, welches dazu vorgesehen ist, bei einem Lastabfall am Wechselrichter 14d die elektrische Energie zumindest teilweise der Lastpuffereinheit 18d zuzuleiten. Das Schaltelement 20d kann insbesondere ein als ein Wechsler ausgebildetes Relais sein. In einem Normalbetrieb der Brennstoffzelleneinheit 12d ist das Schaltelement 20d derart geschaltet, dass die von der Brennstoffzelleneinheit 12d erzeugte elektrische Energie vollständig in das elektrische Netz 16d eingespeist wird. Bei Vorliegen eines Lastabfalls am Wechselrichter 14d ist das Schaltelement 20d derart geschaltet, dass die von der Brennstoffzelleneinheit 12d erzeugte elektrische Energie vollständig der Lastpuffereinheit 18d zugeführt wird. Die Lastpuffereinheit 18d weist eine Steuer- und/oder Regeleinheit 30d auf, welche dazu vorgesehen ist, die Brennstoffzelleneinheit 12d bei einem Lastabfall am Wechselrichter 14d herunterzufahren und die von der Brennstoffzelleneinheit 12d erzeugte elektrische Energie der Lastpuffereinheit 18d zuzuleiten. Insbesondere ist die Steuer- und/oder Regeleinheit 30d dazu vorgesehen, bei Vorliegen eines Lastabfalls am Wechselrichter 14d das Schaltelement 20d derart anzusteuern, dass die von der Brennstoffzelleneinheit 12d erzeugte elektrische Energie vollständig der Lastpuffereinheit 18d zugeführt wird. Die Lastpuffereinheit 18d weist zumindest einen elektrischen Speicher 24d auf, welcher dazu vorgesehen ist, die elektrische Energie bei einem Lastabfall am Wechselrichter 14d zumindest teilweise zu speichern. Der elektrische Speicher 24d kann beispielsweise als eine aufladbare Batterie ausgebildet sein. Die gespeicherte elektrische Energie kann vorteilhaft einer Weiterverwendung zugeführt werden.

## Patentansprüche

1. Brennstoffzellenvorrichtung mit zumindest einer Brennstoffzelleneinheit (12c; 12d), welche zumindest zu einer Erzeugung elektrischer Energie vorgesehen ist, und mit zumindest einem Wechselrichter (14c; 14d), welcher dazu vorgesehen ist, die elektrische Energie zur Einspeisung in ein elektrisches Netz (16c; 16d) umzuformen, und mit einer Lastpuffereinheit (18c; 18d), welche dazu vorgesehen ist, die elektrische Energie bei einem Lastabfall am Wechselrichter (14c; 14d) zumindest teilweise aufzunehmen, **dadurch gekennzeichnet, dass** die Lastpuffereinheit (18c; 18d) auf einer Wechselstromseite (26c; 26d) des Wechselrichters (14c; 14d) angeordnet ist.

2. Brennstoffzellenvorrichtung nach Anspruch 1, **dadurch gekennzeichnet, dass** die Lastpuffereinheit (18c; 18d) zumindest ein Schaltelement (20c; 20c) aufweist, welches dazu vorgesehen ist, bei einem Lastabfall am Wechselrichter (14c; 14d) die elektrische Energie zumindest teilweise der Lastpuffereinheit (18c; 18d) zuzuleiten.

3. Brennstoffzellenvorrichtung nach Anspruch 1 oder 2, **dadurch gekennzeichnet, dass** die Lastpuffereinheit (18c) zumindest einen elektrischen Verbraucher (22c) aufweist, welcher dazu vorgesehen ist, die elektrische Energie bei einem Lastabfall am Wechselrichter (14c) zumindest teilweise umzuwandeln.

4. Brennstoffzellenvorrichtung nach Anspruch 1 oder 2, **dadurch gekennzeichnet, dass** die Lastpuffereinheit (18d) zumindest einen elektrischen Speicher (24d) aufweist, welcher dazu vorgesehen ist, die elektrische Energie bei einem Lastabfall am Wechselrichter (14d) zumindest teilweise zu speichern.

5. Brennstoffzellenvorrichtung nach einem der vorhergehenden Ansprüche, **dadurch gekennzeichnet, dass** die Lastpuffereinheit (18c; 18d) eine Steuer- und/oder Regeleinheit (30c; 30d) aufweist, welche dazu vorgesehen ist, die Brennstoffzelleneinheit (12c; 12d) bei einem Lastabfall am Wechselrichter (14c; 14d) herunterzufahren und die elektrische Energie der Lastpuffereinheit (18c; 18d) zuzuleiten.

6. Brennstoffzellensystem mit zumindest einer Brennstoffzelleneinheit (12c; 12d) nach einem der Ansprüche 1 bis 5.

7. Verfahren zum Betrieb einer Brennstoffzellenvorrichtung (10c; 10d), insbesondere nach einem der Ansprüche 1 bis 6, mit zumindest einer Brennstoffzelleneinheit (12c ;12d), welche zumindest zu einer Erzeugung elektrischer Energie vorgesehen ist, und mit zumindest einem Wechselrichter (14c; 14d), welcher dazu vorgesehen ist, die elektrische Energie zur Einspeisung in ein elektrisches Netz (16c; 16d) umzuformen, wobei die elektrische Energie bei einem Lastabfall am Wechselrichter (14c; 14d) zumindest teilweise von einer Lastpuffereinheit (18c; 18d) aufgenommen wird, **dadurch gekennzeichnet, dass** eine auf einer Wechselstromseite (26c; 26d) des Wechselrichters (14c; 14d) angeordnete Lastpuffereinheit (18c; 18d) ein Schaltelement (20c; 20d) aufweist, welches bei einem Lastabfall am Wechselrichter (14c; 14d) die elektrische Energie zumindest teilweise der Lastpuffereinheit (18c; 18d) zuleitet.

8. Verfahren nach Anspruch 7, **dadurch gekennzeichnet, dass** die Brennstoffzelleneinheit (12c; 12d) bei einem Lastabfall am Wechselrichter (14c; 14d) heruntergefahren und die während des Herunterfahrens von der Brennstoffzelleneinheit (12c ;12d) erzeugte Energie der Lastpuffereinheit (18c; 18d) zugeführt wird.

## Claims

1. Fuel cell apparatus with at least one fuel cell unit (12c; 12d), which is intended at least for generating electrical energy, and with at least one inverter (14c; 14d), which is intended to transform the electrical energy for feeding into an electrical network (16c; 16d), and with a load buffer unit (18c; 18d), which is intended to take up electrical energy at least partially when there is a load drop at the inverter (14c; 14d), **characterized in that** the load buffer unit (18c; 18d) is arranged on an alternating current side (26c; 26d) of the inverter (14c; 14d).

2. Fuel cell apparatus according to Claim 1, **characterized in that** the load buffer unit (18c; 18d) has at least one switching element (20c; 20c), which is intended to direct the electrical energy at least partially to the load buffer unit (18c; 18d) when there is a load drop at the inverter (14c; 14d).

3. Fuel cell apparatus according to Claim 1 or 2, **characterized in that** the load buffer unit (18c) has at least one electrical consumer (22c), which is intended to transform the electrical energy at least partially when there is a load drop at the inverter (14c).

4. Fuel cell apparatus according to Claim 1 or 2, **characterized in that** the load buffer unit (18d) has at least one electrical store (24d), which is intended to store the electrical energy at least partially when there is a load drop at the inverter (14d) .

5. Fuel cell apparatus according to one of the preceding claims, **characterized in that** the load buffer unit (18c; 18d) has an open-loop and/or closed-loop control unit (30c; 30d), which is intended to shut down the fuel cell unit (12c; 12d) when there is a load drop at the inverter (14c; 14d) and to direct the electrical energy to the load buffer unit (18c; 18d) .

6. Fuel cell system with at least one fuel cell unit (12c; 12d) according to one of Claims 1 to 5.

7. Method for operating a fuel cell apparatus (10c; 10d), in particular according to one of Claims 1 to 6, with at least one fuel cell unit (12c; 12d), which is intended at least for generating electrical energy, and with at least one inverter (14c; 14d), which is intended to transform the electrical energy for feeding into an electrical network (16c; 16d), wherein the electrical energy is at least partially taken up by a load buffer unit (18c; 18d) when there is a load drop at the inverter (14c; 14d), **characterized in that** a load buffer unit (18c; 18d) arranged on the alternating current side (26c; 26d) of the inverter (14c; 14d) has a switching element (20c; 20d), which directs the electrical energy at least partially to the load buffer unit (18c; 18d) when there is a load drop at the inverter (14c; 14d).

8. Method according to Claim 7, **characterized in that** the fuel cell unit (12c; 12d) is shut down when there is a load drop at the inverter (14c; 14d) and the energy generated during the shutting down of the fuel cell unit (12c; 12d) is fed to the load buffer unit (18c; 18d).

## Revendications

1. Dispositif de pile à combustible comprenant au moins une unité de pile à combustible (12c ; 12d), laquelle est conçue au moins pour une génération d'énergie électrique, et comprenant au moins un onduleur (14c ; 14d), lequel est conçu pour mettre en forme l'énergie électrique en vue de l'injection dans un réseau électrique (16c ; 16d), et comprenant une unité tampon de charge (18c ; 18d), laquelle est conçue pour absorber au moins partiellement l'énergie électrique dans le cas d'une chute de charge au niveau de l'onduleur (14c ; 14d), **caractérisé en ce que** l'unité tampon de charge (18c ; 18d) est disposée sur un côté courant alternatif (26c ; 26d) de l'onduleur (14c ; 14d).

2. Dispositif de pile à combustible selon la revendication 1, **caractérisé en ce que** l'unité tampon de charge (18c ; 18d) possède au moins un élément de commutation (20c ; 20c), lequel est conçu pour acheminer l'énergie électrique au moins partiellement à l'unité tampon de charge (18c ; 18d) dans le cas d'une chute de charge au niveau de l'onduleur (14c ; 14d).

3. Dispositif de pile à combustible selon la revendication 1 ou 2, **caractérisé en ce que** l'unité tampon de charge (18c) possède au moins un récepteur électrique (22c), lequel est conçu pour convertir au moins partiellement l'énergie électrique dans le cas d'une chute de charge au niveau de l'onduleur (14c).

4. Dispositif de pile à combustible selon la revendication 1 ou 2, **caractérisé en ce que** l'unité tampon de charge (18d) possède au moins un accumulateur électrique (24d), lequel est conçu pour stocker au moins partiellement l'énergie électrique dans le cas d'une chute de charge au niveau de l'onduleur (14d).

5. Dispositif de pile à combustible selon l'une des revendications précédentes, **caractérisé en ce que** l'unité tampon de charge (18c ; 18d) possède une unité de commande et/ou de régulation (30c ; 30d), laquelle est conçue pour, dans le cas d'une chute de charge au niveau de l'onduleur (14c ; 14d), mettre l'unité de pile à combustible (12c ; 12d) à l'arrêt et acheminer l'énergie électrique à l'unité tampon de charge (18c ; 18d).

6. Système de pile à combustible comprenant au moins une unité de pile à combustible (12c ; 12d) selon l'une des revendications 1 à 5.

7. Procédé pour faire fonctionner un dispositif de pile à combustible (10c; 10d), notamment selon l'une des revendications 1 à 6, comprenant au moins une unité de pile à combustible (12c ; 12d), laquelle est conçue au moins pour une génération d'énergie électrique, et comprenant au moins un onduleur (14c ; 14d), lequel est conçu pour mettre en forme l'énergie électrique en vue de l'injection dans un réseau électrique (16c ; 16d), l'énergie électrique, dans le cas d'une chute de charge au niveau de l'onduleur (14c ; 14d), étant au moins partiellement absorbée par une unité tampon de charge (18c ; 18d), **caractérisé en ce qu'**une unité tampon de charge (18c ; 18d) disposée sur un côté courant alternatif (26c ; 26d) de l'onduleur (14c ; 14d) possède un élément de commutation (20c ; 20d), lequel achemine l'énergie électrique au moins partiellement à l'unité tampon de charge (18c ; 18d) dans le cas d'une chute de charge au niveau de l'onduleur (14c ; 14d).

8. Procédé selon la revendication 7, **caractérisé en ce que** l'unité de pile à combustible (12c ; 12d) est mise à l'arrêt dans le cas d'une chute de charge au niveau de l'onduleur (14c ; 14d) et l'énergie générée pendant la mise à l'arrêt de l'unité de pile à combustible (12c ; 12d) est acheminée à l'unité tampon de charge (18c ; 18d).
